# EUROPÄISCHE PATENTANMELDUNG

(11) **EP 2 745 896 A2**
(43) Veröffentlichungstag der Anmeldung: **25.06.2014**
(21) Anmeldenummer: 13005417.4
(22) Anmeldetag: 18.11.2013
(51) Int. Cl.: A63G 21/04, A63G 21/06, A63G 21/08, A63G 21/12, B62B 15/00, B62B 17/08

(54) **Rodeleinrichtung umfassend eine künstlich angelegte, bodennah verlegte abschüssige Rinne und mindestens einen Schlitten**

(30) Priorität: 19.12.2012 DE 202012012179 U
(71) Anmelder: Josef Wiegand GMBH & CO. KG, 36169 Rasdorf (DE)
(72) Erfinder: Wiegand, Josef, 36169 Rasdorf (DE)
(74) Vertreter: Walther, Walther & Hinz GbR

(57) **Zusammenfassung**

Gegenstand der Erfindung ist Rodeleinrichtung umfassend eine künstlich angelegte, bodennah verlegte, abschüssige Rinne (30), wobei die Rinne (30) einzelne miteinander verbundene Platten (40) aufweist, die auf der Fahrbahnseite eine Oberflächenstrukturierung (42) aufweisen, und mit mindestens einem Schlitten (1), wobei an der Unterseite im Randbereich des Schlittens mehrere, jeweils durch eine Schwenkachse (16) um 360° verschwenkbar aufgenommene Rollen oder Räder (15) angeordnet sind.

## Beschreibung

Die vorliegende Erfindung betrifft eine Rodeleinrichtung umfassend eine künstlich angelegte, bodennah verlegte abschüssige Rinne und mindestens einen Schlitten.

Sogenannte Sommerrodelbahnen sind aus dem Stand der Technik hinreichend bekannt. Eine solche Sommerrodelbahn besteht z. B. aus einem abschüssigen und bodennah verlegten Schienengestell für mehrere beabstandet zueinander hintereinander fahrende Schlitten, die über Rollen mit dem Schienengestell in Verbindung stehen. Die Schlitten können hierbei auf dem Gestell manuell und/oder automatisch abgebremst werden. Sommerrodelbahnen der zuvor beschriebenen Art sind beispielsweise aus der DE 10 2009 015 529 A1 und der DE 202 80 207 U1 bekannt. Darüber hinaus sind Sommerrodelbahnen mit einer bodennah verlegten, abschüssigen Rinne bekannt, auf der ebenfalls Schlitten hintereinander zu Tal fahren. Die Rinne weist hierbei eine Breite auf, die nur geringfügig größer ist, als die Breite des mit Rollen oder Rädern versehenen Schlittens.

Darüber hinaus ist bekannt, im Winter auf verschneiten Flächen mit aufblasbaren Schläuchen einen Abhang hinunterzugleiten. Der Spaßfaktor, der ein solches Hinuntergleiten mithilfe eines beispielsweise ausrangierten Schlauches eines LKW sowohl für Jugendliche als auch für Erwachsene mit sich bringt, resultiert im Wesentlichen daraus, dass sich ein solcher Ring während der Talfahrt häufig um die eigene Achse dreht, da er schwer lenkbar ist.

Darüber hinaus ist ein runder Schlitten der eingangs genannten Art nach Art eines sogenannten Tubes bekannt, der einen Kunststoffboden aufweist, wobei im Mittenbereich des Bodens mehrere Rollen angeordnet sind, die jeweils um 360° verschwenkbar sind, sodass sich der Schlitten um seine eigene Achse drehen kann. Nachteilig an einem solchen Schlitten ist einerseits aufgrund der Anordnung der Räder im Mittenbereich des Bodens des Schlittens die hohe Kippneigung. Andererseits laufen die Schlitten in einer Rinne mit glatter Oberfläche. Ein mit Rollen versehener Schlitten ist auf einer solchen Rinne mit glatter Oberfläche nicht abbremsbar. Insofern besteht die Gefahr, dass der Schlitten aus der Rinne herauskatapultiert wird, was die Gefahr schwerer Verletzungen mit sich bringt.

Die Erfindung zugrunde liegende Aufgabe besteht hiervon ausgehend darin, die Gefahr von Unfällen aufgrund überhöhter Geschwindigkeit, unabhängig von Wetter und Jahreszeit drastisch zu verringern.

Zur Lösung der Aufgabe dienen die Merkmale des Anspruchs 1. Es wird erfindungsgemäß vorgeschlagen die Rollen oder Räder im Randbereich des Schlittens anzuordnen, um so einerseits das Kippmoment zu vermindern und andererseits durch die Oberflächenstrukturierung der Fahrbahn den Reibbeiwert der Rollen oder Räder auf der Rinne zu erhöhen.

Eine solche Rinne als Unterlage einer Rodelbahn weist gerade Abschnitte und Kurvenabschnitte auf. Im Bereich der Kurvenabschnitte als auch in den geraden Abschnitten ist die Rinne nach außen gewölbt und hochgezogen ausgebildet, damit der Schlitten sanft über die Bahn geleitet wird. Im Bereich der Kurven ist die Wandung seitlich allerdings weiter hochgezogen, als bei den geraden Abschnitten, um den Schlitten in der Bahn zu halten. In den geraden Abschnitten ist der eigentliche Boden der Rinne eben ausgebildet, damit der Schlitten sich um die eigene Achse drehen kann. Die Rinne selbst besteht aus einzelnen miteinander verbundenen Platten, die durch Gestellstützen insbesondere in seitlicher Richtung und zum Boden zu gehalten sind, und untereinander in Verbindung stehen. Die Verlegung der Platten erfolgt auf Stoß, um stufenförmige Übergänge zu vermeiden. Die Platten weisen darüber hinaus die Oberflächenstrukturierung auf. Der Schlitten, der ebenfalls Gegenstand dieser Anmeldung ist, ist mit Rädern versehen. Diese Räder sind beispielsweise mittels einer Fliehkraftbremse bremsbar. Hierfür ist erforderlich, dass zwischen Rad oder Rolle einerseits und Fahrbahnoberfläche andererseits gewisse Reibbeiwerte eingehalten werden. Wäre die Fahrbahnoberfläche völlig glatt, so würde ein Bremsen, insbesondere bei Nässe, nicht möglich sein. Eine solche Oberflächenstrukturierung sorgt für die entsprechenden Reibbeiwerte, die es ermöglichen, die Räder eines solchen Schlittens auch bei Nässe sicher abzubremsen, das heißt, für eine entsprechende Haftung der Rollen auf der Fahrbahnoberfläche zu sorgen. Vorteilhaft ist in Bezug auf die Oberflächenstrukturierung vorgesehen, dass die Fahrbahnseite der Platten, Einprägungen, beispielsweise in Form einer Siebstruktur oder auch in Form von Prismen aufweist.

Insbesondere hat sich als vorteilhaft herausgestellt, wenn die Platten zur Erstellung der Rinne sogenannte Siebdruckplatten sind. Als Siebdruckplatten werden beschichtete Sperrholzplatten bezeichnet, die mit einem Phenolharz beschichtet sind. Diese Siebdruckplatten zeichnen sich dadurch aus, dass auf einer Seite der Platte ein Siebmuster vorgesehen ist. Die Platten werden auch als LKW-Bodenplatten eingesetzt, sie werden daher auch als Karosseriebauplatten bezeichnet.

Diese Siebdruckplatten als beschichtete Sperrholzplatten haben den großen Vorteil, dass diese auch unter Temperatureinwirkung formstabil sind. Dies hat zur Folge, dass diese Platten, wie bereits ausgeführt, auf Stoß verlegt werden können, auch wenn eine aus solchen Platzten ausgebildete Rinne erheblichen Temperaturschwankungen ausgesetzt ist. Das heißt, der Lauf des Schlittens auf einer soliden Bahn ist ruhiger, als das der Fall wäre, wenn die Platten einander überlappend verlegt wären, was erforderlich wäre, wenn die Platten sich unter Wärmeeinwirkung ausdehnen würden. Darüber hinaus sind die Siebdruckplatten insbesondere unter Wärme biegsam; d. h. die Platten können in ihrer Kontur der gewünschten Rinnenform angepasst werden.

Nach einem weiteren Merkmal ist vorgesehen, dass die Rinne Leitplanken aufweist. Diese Leitplanken sind vorzugsweise federnd nachgiebig ausgebildet, wobei dies zum einen dadurch bewerkstelligt werden kann, dass auf der der Rinne zugewandten Seite der Leitplanken Elastomerkörper angeordnet sind, oder, dass alternativ oder zusätzlich die Leitplanken selbst in Richtung auf die Außenseite der Rinne zu federnd nachgiebig ausgebildet sind. Das bedeutet, dass bei Aufprall die Leitplanke entgegen einer Federkraft ausweicht.

Die Breite der Rinne kann hierbei vor dem Hintergrund eines angenehmen Bewegungsablaufs dem Vielfachen der Breite oder des Durchmessers eines Schlitten entsprechen. Hierdurch könnte dann auch ein Überholvorgang zweier Schlitten ermöglicht werden.

Der Schlitten umfasst ein Gestell in Form eines Gestellkranzes, wobei der Gestellkranz auf der Oberseite eine Sitzeinrichtung und auf der Unterseite die mehreren Rollen oder Räder aufweist, wobei die insbesondere fünf Rollen oder Rädern am Gestellkranz im Randbereich der Sitzeinrichtung durch jeweils eine Schwenkachse um 360° schwenkbar angeordnet sind. Ein solcher Schlitten mit einem Metallgestell zeichnet sich durch eine große Stabilität und Haltbarkeit aus.

So ist insbesondere vorgesehen, dass der Gestellkranz zur Aufnahme der Räder oder Rollen eine damit verbundene Halterung zur Aufnahme der Sitzeinrichtung aufweist. Sowohl der Gestellkranz als auch die damit verbundene Halterung weisen eine ähnliche radiale Erstreckung auf, sodass durch die im Randbereich der Sitzeinrichtung am Gestell angeordneten Rollen oder Räder die Gefahr des Umkippens des Schlittens weitgehend vermieden ist. Diesem Ziel dient auch, dass der Abstand zwischen der Drehachse der Räder oder Rollen und der Oberseite der Sitzeinrichtung möglichst gering gehalten wird, vor dem Hintergrund der Erzielung einer möglichst tiefen Schwerpunktlage.

Die Halterung ist vorteilhaft als Ring ausgebildet, der die Sitzeinrichtung fixierend erfasst. Die Sitzeinrichtung selbst weist eine Hülle zur Aufnahme eines ringförmigen Sitzpolsters auf, insbesondere eines aufblasbaren ringförmigen Sitzpolsters. Die Hülle umfasst einen Boden und einen das ringförmige Sitzpolster kranzförmig abdeckenden Mantel. Daraus wird deutlich, dass nach Einlegen des insbesondere aufblasbaren, ringförmigen Sitzpolsters in die Hülle, eine stabile Verbindung zwischen Hülle und Sitzpolster zur Bildung der Sitzeinrichtung entsteht. Dabei ist insbesondere von Vorteil, wenn die Sitzeinrichtung einschließlich des in der Hülle angeordneten, aufblasbaren Sitzpolsters vor dem Aufblasen des Sitzpolsters in den Gestellkranz eingelegt wird, sodass nach Aufblasen des Sitzpolsters die Sitzeinrichtung sicher durch den Ring der Halterung insofern gehalten wird, als der Ring sich in die Sitzeinrichtung einpresst. Hieraus folgt aber auch, dass der Durchmesser der als Ring ausgebildeten Halterung etwas kleiner ist, als der maximale Durchmesser der Sitzeinrichtung.

Nach einem weiteren Merkmal der Erfindung ist vorgesehen, dass der Gestellkranz auf der Außenseite einen Rammschutz aufweist, um bei Kollision, beispielsweise mit der Randbegrenzung der Unterlage oder mit anderen Schlitten, Beschädigungen am Gestellkranz zu vermeiden. Vorteilhaft ist der Rammschutz in radialer Richtung elastisch nachgiebig ausgebildet, wodurch die Gefahr des Kippens des Schlittens weiter minimiert wird. Insbesondere stellt sich der Rammschutz als aufblasbarer Ring dar.

Gegenstand der Erfindung ist ebenfalls die Anordnung einer Bremseinrichtung an mindestens einer Rolle oder mindestens einem Rad an dem Schlitten. Die Bremseinrichtung kann hierbei nach Art einer Fliehkraftbremse oder einer Wirbelstrombremse ausgebildet sein. Die Bremseinrichtung ist vorteilhaft einstellbar, um die Bremswirkung in Abhängigkeit von dem Gefälle der abschüssigen Unterlage und dem Gewicht, der auf dem Schlitten sitzenden mindestens einen Person einjustieren zu können, um schwerwiegende Unfälle zu vermeiden. Darüber hinaus hat sich als vorteilhaft herausgestellt, wenn die einzelnen Rollen oder Räder mit der Fliehkraftbremse zur Übersetzung ins Schnelle durch einen Riementrieb verbunden sind. Hieraus wird deutlich, dass bereits bei geringer Unterlassungsgeschwindigkeit des Rades die Fliehkraftbremse einsetzt. Das heißt, die Geschwindigkeit des Schlittens wird bereits bei geringer Raddrehzahl reduziert.

Vorteilhaft ist mindestens der Gestellkranz des Schlittens, vorzugsweise allerdings der Schlitten insgesamt rund oder vieleckig ausgebildet. Erst durch eine solche insbesondere runde oder vieleckige, beispielsweise sechs- oder achteckige Ausbildung des Schlittens wird erreicht, dass bei aufsitzender Person der Schlitten sich leicht um die eigene Achse dreht. Zum Festhalten sind hierbei auf dem Mantel Halteschlaufen vorgesehen.

Anhand der Zeichnungen wird die Erfindung nachstehend beispielhaft näher erläutert.
- Fig. 1: zeigt den Schlitten in einer perspektivischen Seitenansicht;
- Fig. 2: zeigt den Schlitten in einer Ansicht schräg von oben;
- Fig. 3: zeigt schematisch einen Ausschnitt der Rinne einer Rodelbahn;
- Fig. 4: zeigt einen Schnitt gemäß der Linie IV-IV aus Fig. 3;
- Fig. 5: zeigt einen Schnitt gemäß der Linie V-V aus Fig. 3;
- Fig. 6: zeigt die Verbindung zweier Platten gemäß Einzelheit X aus Fig. 3;
- Fig. 7: zeigt die Übersetzung zwischen Rad und Fliehkraftbremse;
- Fig. 7a: zeigt das Rad gemäß Fig. 7 in einer Draufsicht.

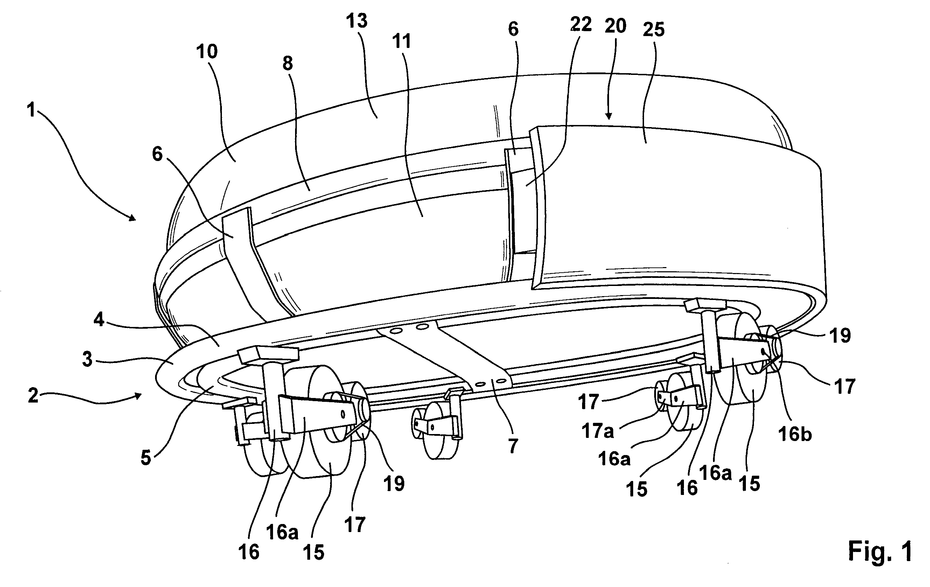

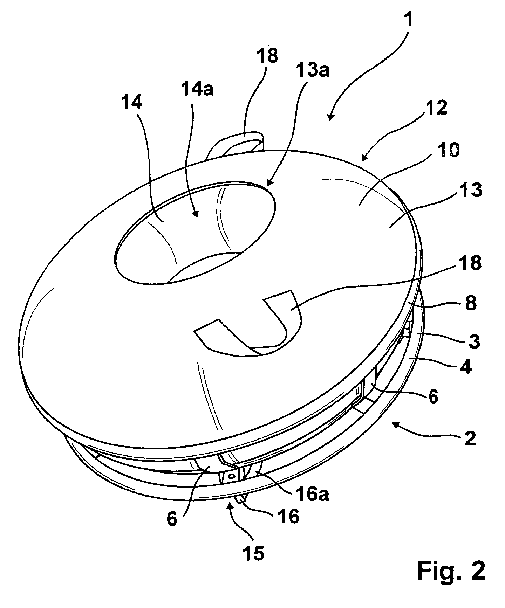

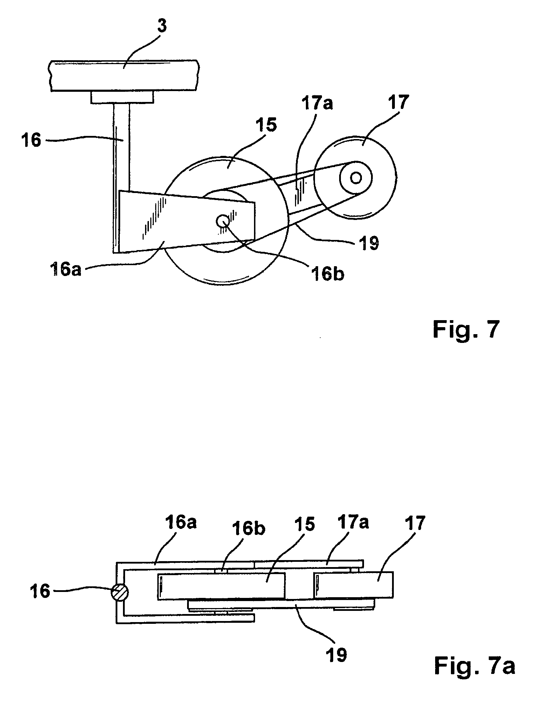

Anhand der Figuren 1 und 2 sowie der Figuren 7 und 7a wird zunächst der Schlitten näher beschrieben. Der insgesamt mit 1 bezeichnete Schlitten weist das Gestell 2, sowie die mit 10 bezeichnete Sitzeinrichtung auf. Das Gestell 2 umfasst einen Gestellkranz 3, wobei der Gestellkranz 3 zwei parallel beabstandet zueinander verlaufende Tragringe 4 und 5 zeigt, wobei durch die beiden in einer Ebene liegenden Tragringe 4 und 5 fünf Räder 15 umfangsverteilt aufgenommen werden. Ein jedes Rad 15 weist eine senkrecht zum Gestellkranz 3 angeordnete Schwenkachse 16 auf, durch die das Rad horizontal verschwenkbar aufgenommen ist. Die Achse ist derart ausgebildet, dass das Rad um die Schwenkachse 16 um 360° verschwenkbar ist. Das Rad selbst weist darüber hinaus eine Fliehkraftbremse 17 auf, die in Abhängigkeit von der Umfangsgeschwindigkeit des Rades das Rad abbremst, wie dies an sich bekannt ist. Solche Fliehkraftbremsen 17 mit den entsprechenden Rädern sind käuflich zu erwerben. Vorteilhaft ist das Rad 15 durch einen Riementrieb 19 mit der Fliehkraftbremse 17 verbunden. Durch den Riementrieb 19 wird eine Übersetzung ins Schnelle von dem Rad zur Fliehkraftbremse bewirkt (Fig. 7, Fig. 7a).

Im Einzelnen stellt sich die Konstruktion des Rades wie folgt dar: An der Achse 16 befindet sich ein U-förmiger Bügel 16a, der eine Drehachse 16b aufnimmt. Auf der Drehachse 16b lagert das Rad 15. Mit dem Rad 15 ist die Fliehkraftbremse durch einen Arm 17a verbunden. Das heißt, zur Übersetzung ist der Riementrieb 19 zwischen Rad und Fliehkraftbremse vorgesehen. Bei Erreichen einer bestimmten Grenzdrehzahl des Rades 16b verhindert die Fliehkraftbremse 17 eine weitere Beschleunigung des Rades. Wesentlich ist, dass die Außenkontur der Fliehkraftbremse oberhalb des Rades 15 liegt, um zu verhindern, dass die Fliehkraftbremse im Seitenbereich der Rinne, also dort wie die Rinne ansteigt, in Kontakt mit der Rinne gerät.

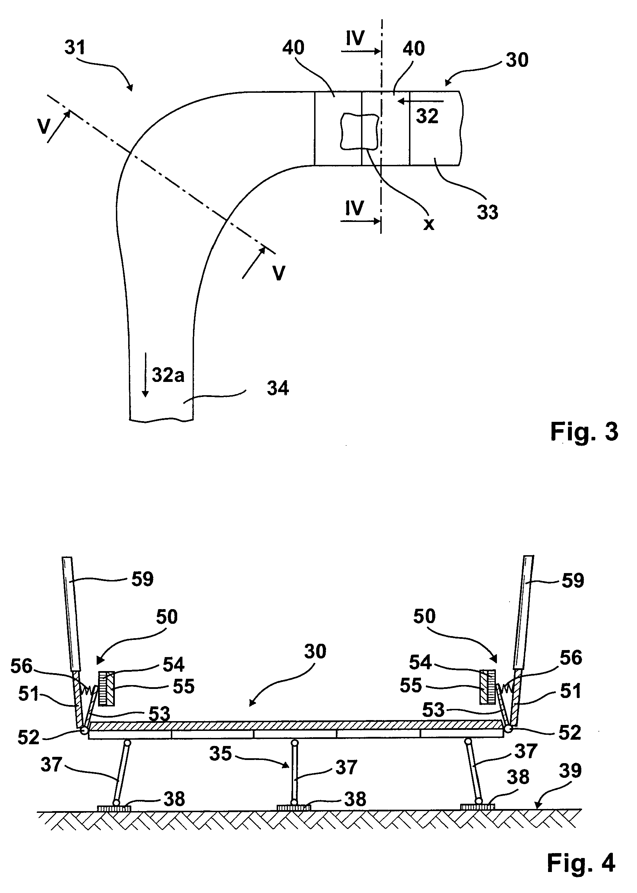

Der Gestellkranz 3 zeigt darüber hinaus mehrere umfangsverteilt angeordnete in Richtung auf die Sitzeinrichtung 10 zugerichtete Arme 6, die endseitig einen Ring 8 halten. Der Durchmesser des Ringes 8 entspricht hierbei in etwa dem des äußeren Tragrings 4 des Gestellkranzes 3. Durch den Gestellkranz 3 in Verbindung mit den Armen 6 und dem Ring 8 wird die insgesamt mit 10 bezeichnete Sitzeinrichtung auf dem Gestellkranz gehalten. Die Sitzeinrichtung 10 umfasst eine Hülle 12 mit einem schüsselförmig gewölbten Boden 11 aus einem verhältnismäßig steifen Kunststoffmaterial z. B. Polypropylen oder Polyethylen. Mit dem gewölbten Boden 11 verbunden ist der mit 13 bezeichnete Mantel, dessen Ausbildung sich insbesondere aus Fig. 3 erschließt. Durch die Hülle 12 aufgenommen ist ein aufblasbares, ringförmiges Sitzpolster 14 mit einem mittigen Freiraum 14a, in dem die auf dem Schlitten sitzende Person mit dem Gesäß einsitzt. Der Mantel 13 weist korrespondierend zu dem Freiraum 14a des ringförmigen Sitzpolsters 14 mittig eine entsprechende Öffnung 13a zur Einführung des aufblasbaren Sitzpolsters 14 auf. An dem Mantel 13 sind darüber hinaus auf seiner Außenseite mehrere Schlaufen 18 angeordnet, um ein Festhalten zu ermöglichen.

Das Gestell 2 zeigt darüber hinaus einen Rammschutz 20. Der Rammschutz 20 setzt sich aus an den Armen 6 angeordneten federelastischen Elementen 22 und einem ringförmig umlaufenden Rammkranz 25 aus einem Elastomermaterial zusammen. Die Höhe des Rammkranzes entspricht etwa dem Abstand des Gestellkranzes 3 zum Ring 8, der der Fixierung der Sitzeinrichtung 10 dient.

Zur Montage der Sitzeinrichtung in dem Gestell 2 wird nun derart vorgegangen, dass zunächst die Hülle 12 umfassend den Boden 11 und den Mantel 13 in das Gestell derart eingelegt wird, dass der Boden 11 auf dem inneren Tragring des Gestellkranzes 3 aufliegt. Die Höhe des tellerförmigen Bodens 11 ist hierbei derart, dass der Rand des Bodens unterhalb des Ringes 8 liegt. Wird nun das ringförmige Sitzpolster 14 beispielsweise in Form eines kreisrunden Schlauches, durch die mittige Öffnung 13a in den Mantel 13 der Hülle 12 eingeführt, und aufgeblasen, dann fixiert sich die Sitzeinrichtung 10 an dem Ring 8 selbsttätig, da der Rand des Bodens unterhalb des Ringes so weit auseinandergedrückt wird, dass bei aufgeblasenem, ringförmigen Sitzpolster, die Sitzeinrichtung sich nicht mehr von dem Gestell 2 zu lösen vermag. Gleichzeitig schnürt auch der Ring 8 das aufblasbare ringförmige Sitzpolster ein, was die Sitzeinrichtung 10 zusätzlich auf dem Gestell 2 sichert.

Am Gestellkranz 3 befindet sich unter der Sitzeinrichtung 10 darüber hinaus ein Gurt 7, der ein "Durchsitzen" verhindert. Das heißt, der Gurt dient der Verstärkung im Bodenbereich der Sitzeinrichtung.

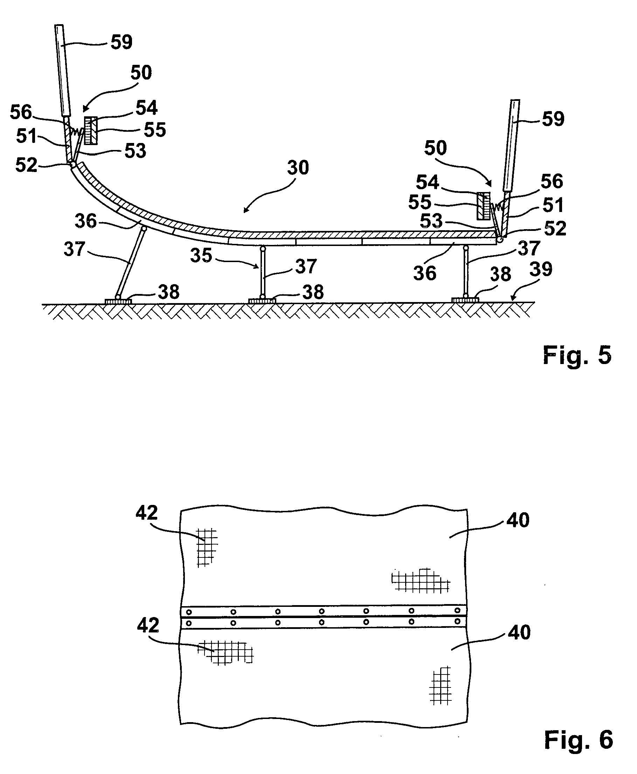

Eine beispielhafte Ausbildung eines Ausschnitts einer Rinne 30 zur verfahrbaren Aufnahme des zuvor beschriebenen Schlittens ist in Fig. 3 mit einer 90° Umlenkung dargestellt. Für die Erstellung der Rinne 30 finden Platten 40 Verwendung, die auf Stoß miteinander verlegt sind, und die eine Oberflächenstruktur 42 zeigen (Fig. 6). Die Oberflächenstruktur 42 kann z. B. durch Streichen mit einer Sandfarbe erzeugt oder auch z. B. eingeprägt werden, wie dies insbesondere von Siebdruckplatten her bekannt ist. Insofern finden auch bevorzugt solche Siebdruckplatten als Platten zur Herstellung der Rinne Verwendung. Siebdruckplatten haben darüber hinaus den Vorteil einer einerseits hohen Stabilität bei andererseits größer Biegsamkeit, sodass mithilfe solcher Siebdruckplatten die besagten Rinnen für die mit Rädern versehenen Schlitten einfach und preiswert herstellbar sind.

Die mit 30 bezeichnete Rinne weist die beiden Rinnenteile 33 und 34 auf, durch die eine Umlenkung 31 mit einem Winkel von ca. 90° die beiden Rinnenteile 33, 34 miteinander verbindet. Die wannenförmige Umlenkung 31 der Rinne ist dabei derart ausgebildet, dass bei Einlauf des Schlittens entsprechend dem Pfeil 32 der Schlitten in der Umlenkung sich in seiner Fahrbewegung derart einschwingt, dass er entsprechend dem Pfeil 32a das Rinnenteil 34 etwa zentrisch durchläuft.

Die Fig. 4 zeigt nun einen Schnitt gemäß der Linie IV-IV aus Fig. 3. Der Boden der Rinne ist eben ausgebildet, er besitzt lediglich seitlich angeordnete Leitplanken 50, die später beschrieben werden. Aus Fig. 4 ist erkennbar, dass über die Breite der Rinne mehrere Gestellstützen 35 mit jeweils mindestens einem Schuh 36 vorgesehen sind, wobei die Schuhe 36 durch Streben 37 über Füße 38 auf dem Untergrund 39 abgestützt sind. Im Bereich der Schuhe 36, die insbesondere im Stoß zweier Platten 40 über den Umfang der Rinne 30 verteilt auf der Unterseite der Platten angeordnet sind, werden die auf Stoß zueinander verlegten Platten 40 mit dem Schuh 36 verschraubt. Die Streben 37 sind hierbei gelenkig mit dem Schuh 36 und dem Fuß 38 verbunden, sodass ein Anpassen an die Beschaffenheit des Untergrunds möglich ist.

Fig. 5 zeigt einen Schnitt durch die Rinne im Bereich einer Kurve oder Umlenkung. Die Rinne 30 ist hierbei zur Kurvenaußenseite zu gewölbt ausgebildet. Seitlich sind auch hier Leitplanken 50 vorgesehen.

Im Randbereich der Rinne befinden sich Leitplanken 50. Die Leitplanke ist entweder an dem Schuh 36 befestigt oder aber an den äußeren Plattenrändern. Eine solche Leitplanke 50, deren Anordnung insbesondere im Kurvenbereich der Rinne 30 vorgesehen ist, setzt sich zusammen aus einem Halter 51 und einem durch ein Gelenk 52 schwenkbar an dem Halter 51 angelenkten Arm 53. Die einzelnen Arme 53 entlang der Rinne sind hierbei durch Bretter 54 oder Ähnliches verbunden, wobei an den Brettern 54, der Rinne zugewandt, ein oder mehrere Polsterelemente 55 angeordnet sind. Der Arm 53 steht mit dem Halter 51 durch eine Feder 56 in Verbindung. Dies hat zur Folge, dass bei Aufprall auf die Polsterelemente 55 diese Polsterelemente 55 entgegen der Kraft der Feder 56 gegen den Halter 51, also in Richtung der Außenseite der Rinne 30, ausweichen.

Die Halter 51 können darüber hinaus der abnehmbaren Aufnahme von Verlängerungsstangen 59 dienen, wobei diese Verlängerungsstangen 59 zur Befestigung von z. B. Fangnetzen (nicht dargestellt) dienen. Diese Fangnetze sorgen für eine zusätzliche Sicherheit gegen ein Heraustragen der Schlitten bei zu hoher Geschwindigkeit. Dies gilt insbesondere, wenn die Rinne mit Schnee belegt ist, und die Rinne als Rodelbahn für die üblichen Tubes dient, mit denen höhere Geschwindigkeiten erreicht werden, als mit den beschriebenen mit Rollen oder Rädern versehenen Schlitten.

### Bezugszeichenliste:

- 1: Schlitten
- 2: Gestell
- 3: Gestellkranz
- 4: Tragring
- 5: Tragring
- 6: Arm
- 7: Gurt (quergespannt)
- 8: Ring
- 10: Sitzeinrichtung
- 11: Boden
- 12: Hülle
- 13: Mantel
- 13a: zentrische Öffnung im Mantel
- 14: aufblasbares, ringförmiges Sitzpolster
- 14a: Freiraum
- 15: Rad
- 16: Schwenkachse
- 16a: U-förmiger Bügel
- 16b: Drehachse
- 17: Fliehkraftbremse
- 17a: Arm für Fliehkraftbremse
- 18: Halteschlaufe
- 19: Riementrieb (Übersetzung ins Schnelle)
- 20: Rammschutz
- 22: federelastische Elemente
- 25: Rammkranz
- 30: Rinne
- 31: Umlenkung
- 32: Pfeil
- 32a: Pfeil
- 33: Rinnenteil
- 34: Rinnenteil
- 35: Gestellstützen
- 36: Schuh
- 37: Strebe
- 38: Fuß
- 39: Untergrund
- 40: Platte
- 42: Oberflächenstruktur auf der Platte
- 50: Leitplanke
- 51: Halter
- 52: Gelenk
- 53: Arm
- 54: die Arme verbindendes Brett o.ä.
- 55: Elastomerkörper
- 56: Feder
- 59: Verlängerungsstange

## Patentansprüche

1. Rodeleinrichtung umfassend eine künstlich angelegte, bodennah verlegte, abschüssige Rinne (30), wobei die Rinne (30) einzelne miteinander verbundene Platten (40) aufweist, die auf der Fahrbahnseite eine Oberflächenstrukturierung (42) aufweisen, und mit mindestens einem Schlitten (1), wobei an der Unterseite im Randbereich des Schlittens mehrere, jeweils durch eine Schwenkachse (16) um 360° verschwenkbar aufgenommene Rollen oder Räder (15) angeordnet sind.

2. Rodeleinrichtung nach Anspruch 1,
**dadurch gekennzeichnet,**
**dass** die Platten (40) der Rinne durch Gestellstützen (35) gehalten sind.

3. Rodeleinrichtung nach Anspruch 1 oder 2,
**dadurch gekennzeichnet,**
**dass** zur Oberflächenstrukturierung (42) der Fahrbahnseite die Platten (40) Einprägungen aufweisen.

4. Rodeleinrichtung nach einem der voranstehenden Ansprüche,
**dadurch gekennzeichnet,**
**dass** die Platten (40) Siebdruckplatten sind.

5. Rodeleinrichtung nach einem der voranstehenden Ansprüche,
**dadurch gekennzeichnet,**
**dass** die Rinne (30) Leitplanken (50) aufweist.

6. Rodeleinrichtung nach Anspruch 5,
**dadurch gekennzeichnet,**
**dass** die Leitplanken (50) federnd nachgiebig ausgebildet sind.

7. Rodeleinrichtung nach Anspruch 5 oder 6,
**dadurch gekennzeichnet,**
**dass** die Leitplanken (50) durch Arme (53) gehalten sind, wobei an den Armen (53) Verlängerungsstangen (59) zur Aufnahme von z. B. Fangnetzen angeordnet sind.

8. Rodeleinrichtung nach einem der voranstehenden Ansprüche,
**dadurch gekennzeichnet,**
**dass** die Rinne (30) eine Breite aufweist, die dem Vielfachen der Breite oder des Durchmessers eines Schlittens (1) entspricht, um einen Überholvorgang zu ermöglichen.

9. Rodeleinrichtung nach einem der voranstehenden Ansprüche,
**dadurch gekennzeichnet,**
**dass** der Schlitten (1) einen Gestellkranz (3) zur Anordnung der Rollen oder Räder (15) und eine damit verbundene Halterung zur Aufnahme einer Sitzeinrichtung (10) aufweist.

10. Rodeleinrichtung nach Anspruch 9,
**dadurch gekennzeichnet,**
**dass** die Halterung als Ring (8) ausgebildet ist, der die Sitzeinrichtung (10) fixierend erfasst.

11. Rodeleinrichtung nach einem der Ansprüche 9 oder 10,
**dadurch gekennzeichnet,**
**dass** der Gestellkranz (2) auf der Außenseite einen in radialer Richtung elastisch nachgiebigen Rammschutz (20) aufweist.

12. Rodeleinrichtung nach einem der Ansprüche 9 bis 11,
**dadurch gekennzeichnet,**
**dass** die Sitzeinrichtung (10) eine Hülle (12) zur Aufnahme eines ringförmigen Sitzpolsters (14) aufweist, wobei das ringförmige Sitzpolster (14) aufblasbar ist.

13. Rodeleinrichtung nach Anspruch 12,
**dadurch gekennzeichnet,**
**dass** die Hülle (12) einen Boden (11) und einen das ringförmige Sitzpolster (14) kranzförmig abdeckenden Mantel (13) umfasst.

14. Rodeleinrichtung nach einem der voranstehenden Ansprüche,
**dadurch gekennzeichnet,**
**dass** mindestens eine Rolle oder Rad (15) eine Bremseinrichtung (17), z. B. eine Fliehkraftbremse oder Wirbelstrombremse aufweist.

15. Rodeleinrichtung nach Anspruch 14,
**dadurch gekennzeichnet,**
**dass** die Rolle oder Rad (15) mit der Bremseinrichtung (17) zur Übersetzung ins Schnelle durch einen Riementrieb (19) verbunden ist.
